# EUROPÄISCHE PATENTSCHRIFT

(11) **EP 3 717 722 B1**
(45) Veröffentlichungstag und Bekanntmachung des Hinweises auf die Patenterteilung: **29.11.2023**
(21) Anmeldenummer: 18807604.6
(22) Anmeldetag: 20.11.2018
(51) Int. Cl.: E05F 15/622

(54) **SPINDELANTRIEBSBAUGRUPPE SOWIE FAHRZEUGKLAPPE MIT EINER SPINDELANTRIEBSBAUGRUPPE**
SPINDLE DRIVE ASSEMBLY AND VEHICLE FLAP WITH A SPINDLE DRIVE ASSEMBLY
MODULE D'ENTRAÎNEMENT À VIS ET OUVRANT DE VÉHICULE DOTÉ D'UN MODULE D'ENTRAÎNEMENT À VIS

(30) Priorität: 30.11.2017 DE 102017128390
(43) Veröffentlichungstag der Anmeldung: 07.10.2020
(73) Patentinhaber: Minebea AccessSolutions Deutschland GmbH, 85253 Erdweg (DE)
(72) Erfinder: KUMMER, Frank, 85253 Erdweg (DE)
(74) Vertreter: Prinz & Partner mbB
(86) Internationale Anmeldenummer: PCT/EP2018/081958
(87) Internationale Veröffentlichungsnummer: WO 2019/105805

(56) Entgegenhaltungen:
- EP-A1- 2 543 808
- WO-A1-2014/096172

## Beschreibung

Die Erfindung betrifft eine Spindelantriebsbaugruppe zum Öffnen und/oder Schließen einer Fahrzeugklappe.

Ferner betrifft die Erfindung eine Fahrzeugklappe, insbesondere eine Fahrzeugheckklappe oder einen Fahrzeugkofferraumdeckel, mit einer solchen Spindelantriebsbaugruppe.

Fahrzeugklappen sowie Spindelantriebsbaugruppen der eingangs genannten Art sind aus dem Stand der Technik bekannt.

Die bekannten Spindelantriebsbaugruppen umfassen in der Regel einen elektrischen Spindelantrieb, mittels dem die zugeordnete Fahrzeugklappe geöffnet und/oder geschlossen werden kann. Ein Nutzer eines zugehörigen Fahrzeugs muss also das Öffnen und/oder Schließen nicht mehr manuell vornehmen. Er muss lediglich einen Befehl zum Öffnen oder Schließen an die Spindelantriebsbaugruppe absenden, was er beispielsweise über eine Funkfernbedienung oder über einen im Fahrzeug angeordneten Schalter tun kann. Auch kann ein fahrzeugaußenseitig angeordneter Fußschalter verwendet werden, der berührungslos arbeiten kann.

Beispielsweise ist aus der EP 2 543 808 A1 eine Spindelantriebsbaugruppe zum Öffnen und/oder Schließen einer Fahrzeugklappe bekannt, die eine Spindel und einen über ein Getriebe mit der Spindel antriebsmäßig gekoppelten Spindelantriebsmotor aufweist. Dem Spindelantriebsmotor und dem Getriebe ist eine Hysteresebremse zwischengeschaltet.

Nicht zuletzt aufgrund der Herstellung solcher Spindelantriebsbaugruppen mit hohen Stückzahlen wird angestrebt, diese möglichst kostengünstig produzieren zu können. Gleichzeitig werden seitens der Kraftfahrzeugnutzer Fahrzeugklappen und damit verbundene Spindelantriebsbaugruppen von hoher Qualität und Zuverlässigkeit nachgefragt.

Offensichtlich besteht zwischen der günstigen Herstellbarkeit und einer hohen Zuverlässigkeit ein Zielkonflikt.

Die Aufgabe der Erfindung ist es daher, diesen Zielkonflikt zu überwinden und eine Spindelantriebsbaugruppe anzugeben, die sowohl einfach und kostengünstig hergestellt werden kann, als auch zuverlässig im Betrieb ist. Darüber hinaus soll die Spindelantriebsbaugruppe möglichst kompakt sein.

Die Aufgabe wird durch eine Spindelantriebsbaugruppe der eingangs genannten Art gelöst, die eine sich entlang einer Spindelantriebsachse erstreckende Spindel und einen über ein Getriebe mit der Spindel antriebsmäßig gekoppelten Spindelantriebsmotor umfasst, dessen Motorwelle im Wesentlichen koaxial zur Spindelantriebsachse angeordnet ist, wobei dem Spindelantriebsmotor und dem Getriebe eine Achsversatz ausgleichende Kupplung sowie eine Hysteresebremse antriebsmäßig zwischengeschaltet sind. Die Achsversatz ausgleichende Kupplung ermöglicht es dabei, den Spindelantriebsmotor sowie das Getriebe unter Einhaltung vergleichsweise grober Toleranzen herzustellen und/oder zu montieren. Dadurch wird der Herstellungsprozess und/oder der Montageprozess vereinfacht. Einschränkungen im Betrieb, zum Beispiel Antriebsversteifungen oder unerwünschte Geräusche, werden durch den Ausgleich des Achsversatzes ausgeschlossen. Die Hysteresebremse dient der Beschränkung einer Drehzahl der Motorwelle und/oder dem Festlegen der Motorwelle. Insgesamt ist so eine besonders zuverlässig arbeitende Spindelantriebsbaugruppe gewährleistet.

Bevorzugt ist die Kupplung eine Oldhamkupplung und umfasst ein antriebsmotorseitiges Kupplungsteil und ein getriebeseitiges Kupplungsteil. Eine Oldhamkupplung ist vergleichsweise einfach aufgebaut und zuverlässig in ihrer Funktion. Zudem ist sie verhältnismäßig kompakt. Da das Funktionsprinzip einer Oldhamkupplung allgemein bekannt ist, wird hier nicht im Detail darauf eingegangen.

Die Hysteresebremse kann ein an einem Spindelantriebsbaugruppengehäuse und/oder an einem Getriebegehäuse befestigtes, feststehendes Hysteresebremsenbauteil und ein mit einer Motorwelle des Spindelantriebsmotors drehgekoppeltes, drehbares Hysteresebremsenbauteil umfassen. Die Hysteresebremse wirkt also zwischen der Motorwelle und dem Spindelantriebsbaugruppengehäuse und/oder dem Getriebegehäuse. Nach dem das Spindelantriebsbaugruppengehäuse und/oder das Getriebegehäuse im wesentlichen drehfest an einer Fahrzeugklappe gelagert sind bzw. ist, ist die Hysteresebremse dazu ausgebildet, die Motorwelle bis zum Stillstand abzubremsen. Somit können unerwünschte Bewegungen der Motorwelle zuverlässig ausgeschlossen werden.

Vorteilhafterweise ist das drehbare Hysteresebremsenbauteil am antriebsmotorseitigen Kupplungsteil befestigt oder in das antriebsmotorseitige Kupplungsteil integriert. Es ergibt sich so eine besonders kompakte Bauweise der Spindelantriebsbaugruppe. Die Funktion der Kupplung und/oder der Hysteresebremse wird dadurch nicht beeinträchtigt. Global gesprochen ist die Hysteresebremse in die Kupplung integriert oder umgekehrt.

Das drehbare Hysteresebremsenbauteil kann in das antriebsmotorseitige Kupplungsteil eingespritzt sein. Das drehbare Hysteresebremsenbauteil wird also schon während der Herstellung des antriebsmotorseitigen Kupplungsteils in dieses integriert. Dadurch ist die Integration besonders einfach und kostengünstig.

Gemäß einer Ausführungsform ist die Kupplung senkrecht zur Spindelantriebsachse betrachtet in axialer Richtung im Wesentlichen vollständig innerhalb der Hysteresebremse, insbesondere innerhalb eines feststehenden Hysteresebremsenbauteils angeordnet. Ausgehend von einer Spindelantriebsbaugruppe, die lediglich eine Hysteresebremse und keine Kupplung umfasst, wird die Spindelantriebsbaugruppe also durch die Integration der Kupplung in axialer Richtung nicht länger. In Anbetracht des mit der Kupplung erweiterten Funktionsumfangs ist die Spindelantriebsbaugruppe also besonders kompakt.

Ferner wird die Aufgabe durch eine Fahrzeugklappe der eingangs genannten Art mit einer erfindungsgemäßen Spindelantriebsbaugruppe gelöst. Eine solche Fahrzeugklappe ist vergleichsweise kostengünstig herstellbar und besonders zuverlässig im Betrieb. Zudem baut sie kompakt.

Neben den vorgenannten Fahrzeugklappen können auch Gepäck- oder Ladeklappen von Freizeit- oder Nutzfahrzeugen mit einer erfindungsgemäßen Spindelantriebsbaugruppe ausgestattet sein. Gleiches gilt für Motorhauben und Fahrzeugfrontklappen.

Die Erfindung wird nachstehend anhand eines Ausführungsbeispiels erläutert, das in den beigefügten Zeichnungen gezeigt ist. Es zeigen:
- Figur 1 schematisch eine erfindungsgemäße Fahrzeugklappe mit einer erfindungsgemäßen Spindelantriebsbaugruppe, die mittels eines erfindungsgemäßen Verfahrens montiert ist,
- Figur 2 die Spindelantriebsbaugruppe aus Figur 1 in einer schematischen Schnittansicht,
- Figur 3 die Spindelantriebsbaugruppe aus Figur 1 in einer Explosionsdarstellung,
- Figur 4 die Spindelantriebsbaugruppe aus Figur 1 in einer geschnittenen Detailansicht,
- Figur 5 einen Spindelantriebsmotor der Spindelantriebsbaugruppe aus Figur 1 in einer perspektivischen Ansicht,
- Figur 6 schematisch das Zusammenwirken des Spindelantriebsmotors aus Figur 5 mit einem Spindelantriebsbaugruppengehäuse in einer teilweise geschnittenen Darstellung,
- Figur 7 schematisch eine endseitige Ansicht des Spindelantriebsmotors aus den Figuren 5 und 6 sowie einer mit dem Spindelantriebsmotor verbindbaren Gehäusekappe,
- Figur 8 eine Explosionsdarstellung eines zweistufigen Umlaufrädergetriebes der Spindelantriebsbaugruppe aus Figur 1, das mittels eines erfindungsgemäßen Verfahrens montierbar ist,
- Figur 9 eine weitere Explosionsdarstellung des zweistufigen Umlaufrädergetriebes der Spindelantriebsbaugruppe aus Figur 1, wobei das Umlaufrädergetriebe teilweise mittels eines erfindungsgemäßen Verfahrens montiert ist,
- Figur 10 eine ein zweistufiges Umlaufrädergetriebe, eine Kupplung, eine Hysteresebremse und einen Spindelantriebsmotor umfassende Explosionsdarstellung der Spindelantriebsbaugruppe aus Figur 1,
- Figur 11 eine Spindeleinheit der Spindelantriebsbaugruppe aus Figur 1 in einer Explosionsdarstellung,
- Figur 12 ein Detail der Spindeleinheit aus Figur 11,
- Figur 13 ein Detail der Spindelantriebsbaugruppe aus Figur 1 in einer Schnittdarstellung und
- Figur 14 ein weiteres Detail der Spindelantriebsbaugruppe aus Figur 1 in einer Schnittdarstellung.

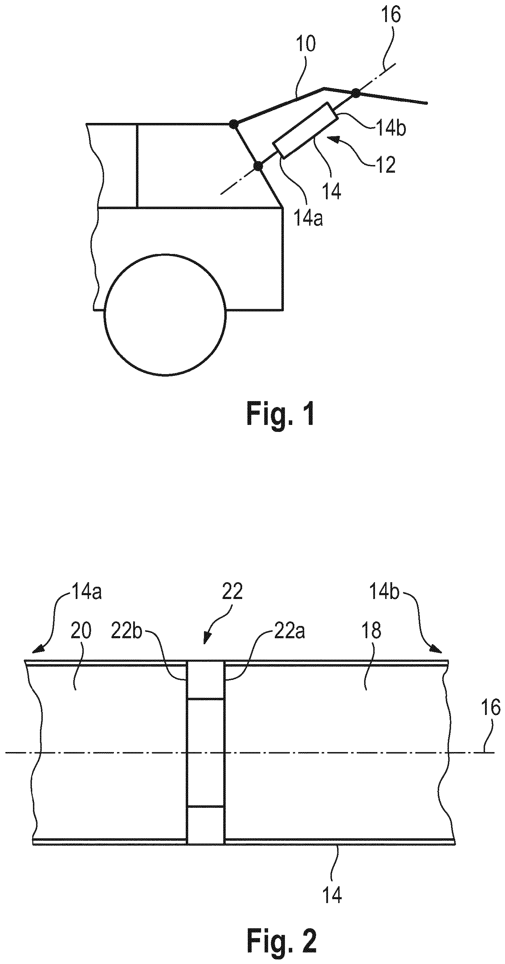

Figur 1 zeigt eine Fahrzeugklappe 10, die vorliegend eine Fahrzeugheckklappe ist, mit einer Spindelantriebsbaugruppe 12, mittels der die Fahrzeugklappe 10 geöffnet und/oder geschlossen werden kann.

Die Spindelantriebsbaugruppe 12 umfasst ein Spindelantriebsbaugruppengehäuse 14, das sich entlang einer Spindelantriebsachse 16 erstreckt.

Wie insbesondere anhand von Figur 2 zu sehen ist, sind im Spindelantriebsbaugruppengehäuse 14 eine in Figur 2 lediglich schematisch dargestellte Motorgetriebeeinheit 18 sowie eine ebenfalls in Figur 2 nur schematisch dargestellte Spindeleinheit 20 angeordnet.

Dabei umfasst das Spindelantriebsbaugruppengehäuse 14 zwischen seinen axialen Enden 14a, 14b einen axial beidseitig wirkenden Anschlagsabschnitt 22.

Die Motorgetriebeeinheit 18 ist auf einer ersten axialen Seite 22a des Anschlagsabschnitts 22 angeordnet und die Spindeleinheit 20 auf einer zweiten, der ersten axialen Seite 22a entgegengesetzten axialen Seite 22b.

Sowohl die Motorgetriebeeinheit 18 als auch die Spindeleinheit 20 liegen am Anschlagsabschnitt 22 an.

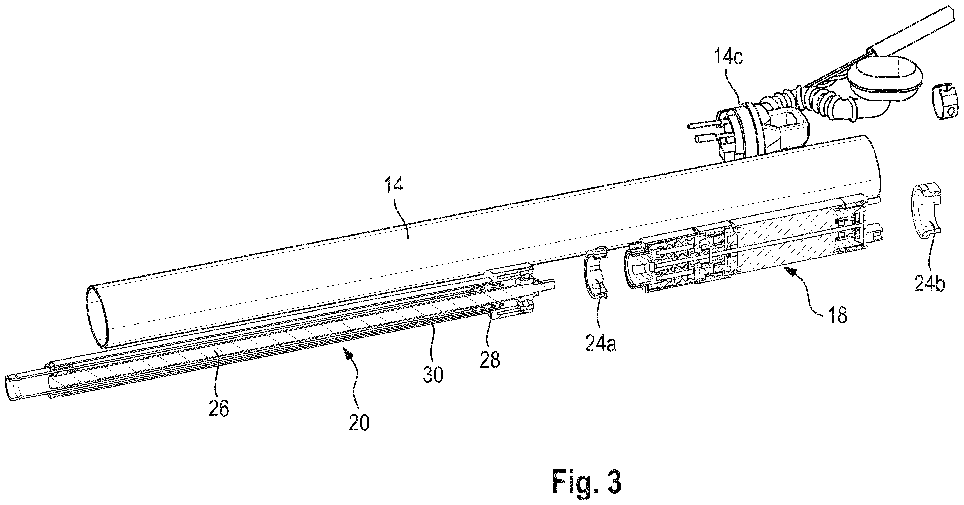

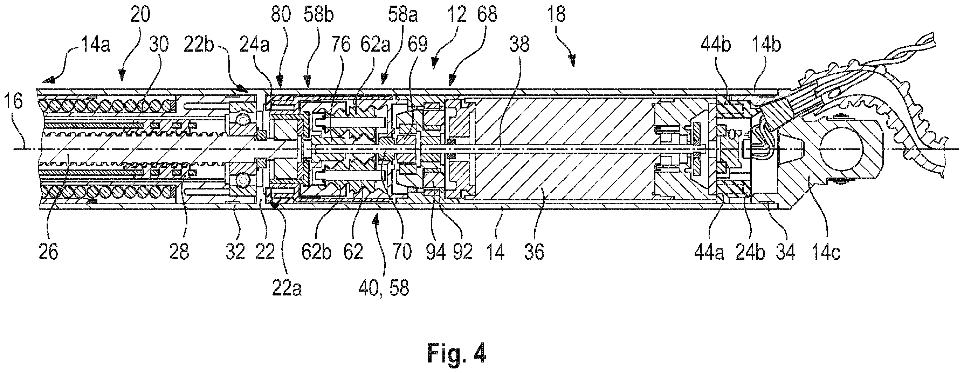

In der dargestellten Ausführungsform (siehe insbesondere die Figuren 3 und 4) ist die Motorgetriebeeinheit 18 über zwei Dämpfungselemente 24a, 24b, die aus einem Elastomer hergestellt sind, im Spindelantriebsbaugruppengehäuse 14 gelagert.

Die Spindeleinheit 20 umfasst neben einer Spindel 26 und einer mit dieser gekoppelten Spindelmutter 28 ein Führungsrohr 30.

In der dargestellten Ausführungsform ist das Führungsrohr 30 am Spindelantriebsbaugruppengehäuse 14 befestigt. Genauer gesagt, ist das Führungsrohr 30 mit dem Spindelantriebsbaugruppengehäuse 14 laserverschweißt. Die Laserschweißnaht 32 ist dabei lediglich schematisch eingezeichnet.

Der Anschlagsabschnitt 22 ist einstückig mit dem Spindelantriebsbaugruppengehäuse 14 produziert.

Dabei ist das Spindelantriebsbaugruppengehäuse 14 aus einem Kunststoff hergestellt.

Vorliegend ist der Anschlagsabschnitt 22 mittels Spritzgießen des Spindelantriebsbaugruppengehäuses 14 hergestellt.

Das Spindelantriebsbaugruppengehäuse 14 umfasst zusätzlich eine Gehäusekappe 14c. Diese schließt das Spindelantriebsbaugruppengehäuse 14 motorgetriebeeinheitsseitig ab.

Die Gehäusekappe 14c und das Spindelantriebsbaugruppengehäuse 14 sind laserverschweißt. Die Laserschweißnaht 34 ist dabei wieder nur schematisch eingezeichnet.

Die Montage der Spindelantriebsbaugruppe 12 läuft folgendermaßen ab.

Zunächst wird das Spindelantriebsbaugruppengehäuse 14 bereitgestellt.

Dann wird die Motorgetriebeeinheit 18 ausgehend von einer ersten axialen Seite des Spindelantriebsbaugruppengehäuses 14, auf der im gezeigten Beispiel das axiale Ende 14b angeordnet ist, in das Spindelantriebsbaugruppengehäuse 14 eingesetzt.

Dabei wird die Motorgetriebeeinheit 18 an die erste axiale Seite 22a des Anschlagsabschnitts 22 angelegt.

Die Spindeleinheit 20 wird von einer der ersten axialen Seite des Spindelantriebsbaugruppengehäuses 14 entgegengesetzten, zweiten axialen Seite 22b des Spindelantriebsbaugruppengehäuses 14 in dieses eingesetzt. In der dargestellten Ausführungsform ist auf dieser Seite das axiale Ende 14a angeordnet.

Die Spindeleinheit 20 wird an die zweite axiale Seite 22b des Anschlagsabschnitts 22 angelegt.

Ob zuerst die Motorgetriebeeinheit 18 oder zuerst die Spindeleinheit 20 am Spindelantriebsbaugruppengehäuse 14 montiert wird, ist für das Montageverfahren unerheblich. Es können auch die Motorgetriebeeinheit 18 und die Spindeleinheit 20 im Wesentlichen gleichzeitig montiert werden.

Wenn die Spindeleinheit 20 im Spindelantriebsbaugruppengehäuse 14 eingesetzt ist, wird diese darin befestigt. In der dargestellten Ausführungsform umfasst die Spindeleinheit 20 ein Führungsrohr 30, das mittels der Laserschweißnaht 32 am Spindelantriebsbaugruppengehäuse 14 befestigt wird.

Das Spindelantriebsbaugruppengehäuse 14 und das Führungsrohr 30 werden also laserverschweißt.

Nachfolgend wird das Spindelantriebsbaugruppengehäuse 14 am Ende 14b mittels einer Gehäusekappe 14c abgeschlossen. In diesem Zusammenhang wird das Spindelantriebsbaugruppengehäuse 14 mit der Gehäusekappe 14c laserverschweißt.

Die Motorgetriebeeinheit 18 umfasst einen Spindelantriebsmotor 36, der über eine Motorwelle 38 mit einem Getriebe 40 gekoppelt ist.

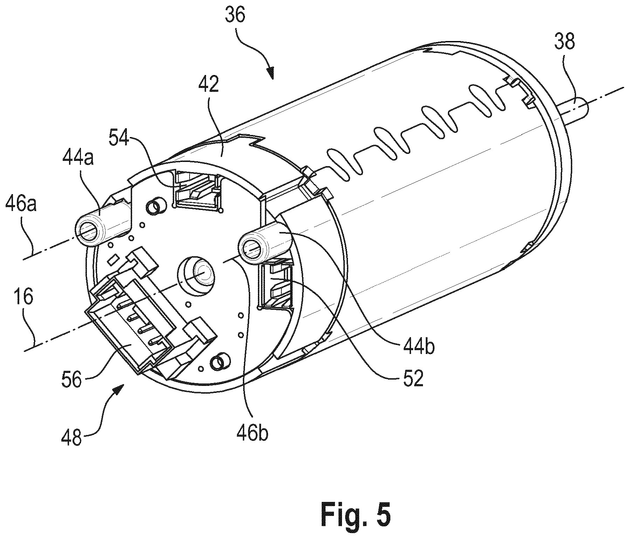

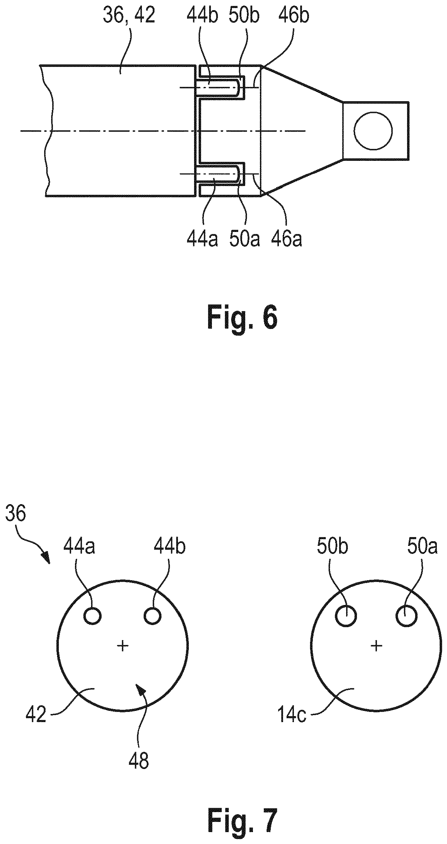

Die Figuren 5 - 7 zeigen den Spindelantriebsmotor 36 im Detail.

Nachdem die Motorgetriebeeinheit 18 im Spindelantriebsbaugruppengehäuse 14 angeordnet ist, ist auch der Spindelantriebsmotor 36 im Spindelantriebsbaugruppengehäuse 14 positioniert. Die Motorwelle 38 ist dabei im Wesentlichen koaxial zur Spindelantriebsachse 16.

Der Spindelantriebsmotor 36 und damit die Motorgetriebeeinheit 18 sind zudem über einen Formschluss bezüglich der Spindelantriebsachse 16 rotationsfest im Spindelantriebsbaugruppengehäuse 14 gelagert.

Genauer gesagt, ist der Spindelantriebsmotor 36 rotationsfest über einen Formschluss an der Gehäusekappe 14c gelagert, die ein Bestandteil des Spindelantriebsbaugruppengehäuses 14 ist.

Die rotationsfeste Lagerung erfolgt dabei über ein Motorgehäuse 42 des Spindelantriebsmotors 36.

An diesem sind in der dargestellten Ausführungsform zwei Antirotationsvorsprünge 44a, 44b vorgesehen, die sich im montierten Zustand des Spindelantriebsmotors 36 und damit auch der Motorgetriebeeinheit 18 im Wesentlichen entlang der Spindelantriebsachse 16 erstrecken.

Vorliegend sind die Antirotationsvorsprünge 44a, 44b kreiszylinderförmig, wobei im montierten Zustand des Spindelantriebsmotors 36 die zugeordneten Kreiszylindermittelachsen 46a, 46b im Wesentlichen parallel zur Spindelantriebsachse 16 verlaufen.

Die Antirotationsvorsprünge 44a, 44b sind an einer axialen Endseite 48 des Spindelantriebsmotors 36 vorgesehen, die der Motorwelle 38 abgewandt ist. Im montierten Zustand liegen die Antirotationsvorsprünge 44a, 44b also auf einer dem Getriebe 40 entgegengesetzten Seite des Spindelantriebsmotors 36.

Die Antirotationsvorsprünge 44a, 44b greifen im montierten Zustand in zugeordnete, am Spindelantriebsbaugruppengehäuse 14 vorgesehene Vertiefungen 50a, 50b ein. In der dargestellten Ausführungsform sind die Vertiefungen 50a, 50b an der Gehäusekappe 14c vorgesehen.

Genauer gesagt, sind in der dargestellten Ausführungsform die Vertiefungen 50a, 50b am Dämpfungselement 24b vorgesehen, das drehfest mit der Gehäusekappe 14c verbunden ist.

Die Antirotationsvorsprünge 44a, 44b können alternativ über elastische, auf den Antirotationsvorsprüngen 44a, 44b angeordnete Dämpfungskappen oder über elastische, in den Vertiefungen 50a, 50b angeordnete Dämpfungselemente in die Vertiefungen 50a, 50b eingreifen.

Wie insbesondere anhand Figur 5 zu erkennen ist, sind in der dargestellten Ausführungsform neben den Antirotationsvorsprüngen 44a, 44b zusätzlich ein erster elektrischer Leistungsanschluss 52, ein zweiter elektrischer Leistungsanschluss 54 sowie ein Sensoranschluss 56 an der axialen Endseite 48 des Spindelantriebsmotors 36 vorgesehen.

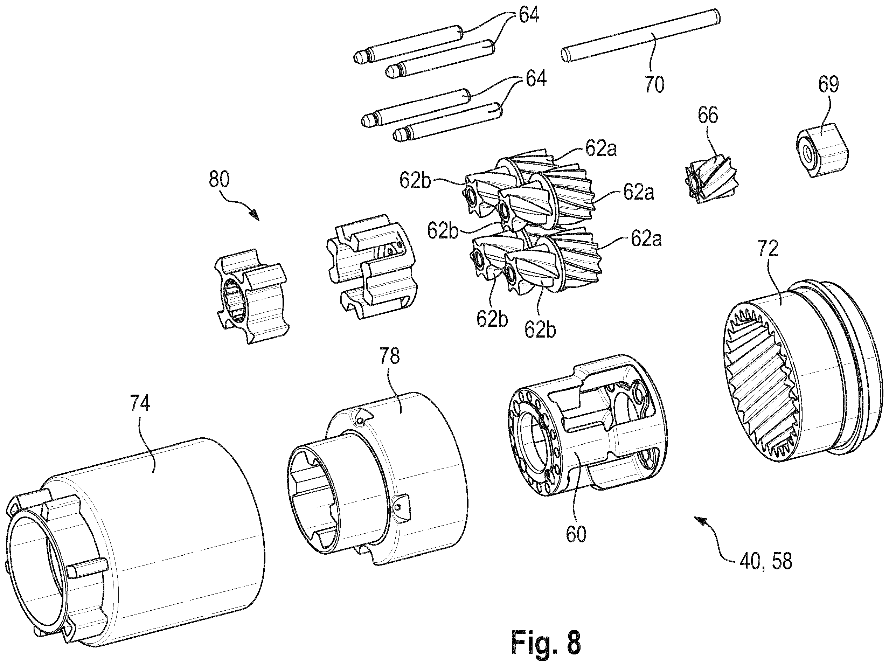

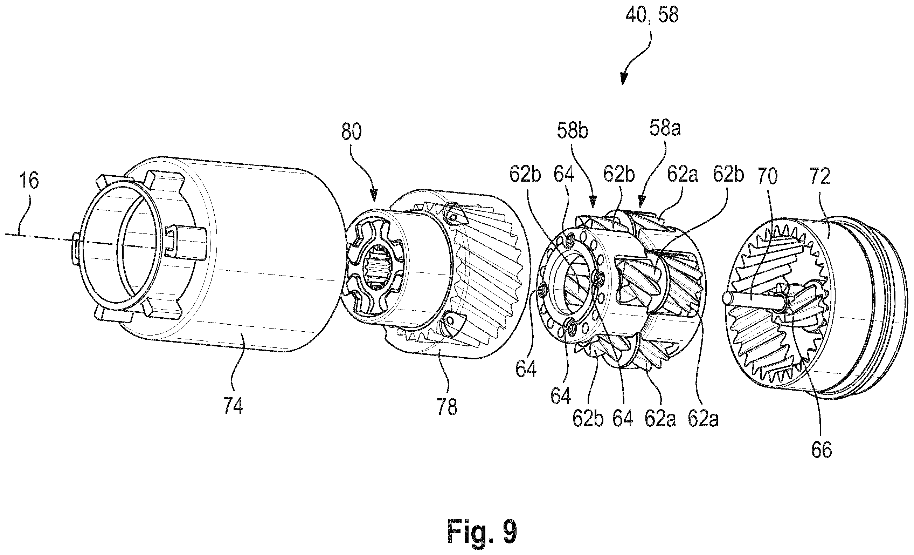

In den Figuren 8 und 9 ist das Getriebe 40 im Detail zu sehen.

Dabei ist zu erkennen, dass das Getriebe 40 ein zweistufiges Umlaufrädergetriebe 58 ist.

In diesem Zusammenhang umfasst es eine erste Umlaufrädergetriebestufe 58a, die auch als motorseitige oder antriebsseitige Umlaufrädergetriebestufe 58a bezeichnet wird, und eine zweite Umlaufrädergetriebestufe 58b, die auch als spindelseitige oder abtriebsseitige Umlaufrädergetriebestufe 58b bezeichnet wird.

Das Umlaufrädergetriebe 58 ist spiralverzahnt. Beide Umlaufrädergetriebestufen 58a, 58b weisen dabei gleichsinnige Spiralverzahnungen auf.

Zudem umfasst das zweistufige Umlaufrädergetriebe 58 lediglich einen einzigen, singulären Planetenträger 60. Dieser gehört also zu beiden Umlaufrädergetriebestufen 58a, 58b.

Darüber hinaus umfassen sowohl die motorseitige Umlaufrädergetriebestufe 58a als auch die spindelseitige Umlaufrädergetriebestufe 58b eine gleiche Anzahl an Planetenrädern 62a, 62b. Im dargestellten Ausführungsbeispiel umfasst jede der Umlaufrädergetriebestufen 58a, 58b vier Planetenräder 62a, 62b.

Dabei sind jeweils ein Planetenrad 62a der ersten Umlaufrädergetriebestufe 58a und ein Planetenrad 62b der zweiten Umlaufrädergetriebestufe 58b auf einer gemeinsamen Planetenradachse 64 gelagert.

Die auf einer gemeinsamen Planetenradachse 64 gelagerten Planetenräder 62a, 62b sind drehfest miteinander verbunden.

Das Umlaufrädergetriebe 58 funktioniert folgendermaßen.

Die Motorwelle 38 ist mit einem Sonnenrad 66 der motorseitigen Umlaufrädergetriebestufe 58a drehgekoppelt. Somit stellt das Sonnenrad 66 den Antrieb oder den Drehmomenteingang des Umlaufrädergetriebes 58 dar.

Nachdem diese Kopplung über eine Kupplung 68 erfolgt, ist streng genommen eine Getriebeeingangswelle 70 mit dem Sonnenrad 66 gekoppelt. Diese kann jedoch als Fortsetzung der Motorwelle 38 angesehen werden.

Die Kupplung 68 ist in der dargestellten Ausführungsform eine Oldhamkupplung zum Ausgleich von Achsversatz. In Figur 8 ist dabei lediglich ein getriebeseitiges Kupplungsteil 69 zu sehen, das mit der Getriebeeingangswelle 70 verbunden ist.

Das Sonnenrad 66 wirkt mit den Planetenrädern 62a der motorseitigen Umlaufrädergetriebestufe 58a zusammen, die wiederum mit einem Hohlrad 72 der motorseitigen Umlaufrädergetriebestufe 58a gekoppelt sind.

Das Hohlrad 72 ist drehfest und axialfest in dem Spindelantriebsbaugruppengehäuse 14 und/oder in einem Umlaufrädergetriebegehäuse 74 gelagert. Das Hohlrad 72 steht also im Wesentlichen fest im Raum.

Die motorseitige Umlaufrädergetriebestufe 58a ist mit der spindelseitigen Umlaufrädergetriebestufe 58b sowohl über den singulären Planetenträger 60 als auch über die einstückigen Planetenräder 62a, 62b gekoppelt.

Dabei ist die spindelseitige Umlaufrädergetriebestufe 58b sonnenradfrei ausgeführt.

Die Planetenräder 62b der spindelseitigen Umlaufrädergetriebestufe 58b sind lediglich radial auf einem axialen Lagerfortsatz 76 der Sonnenradwelle der motorseitigen Umlaufrädergetriebestufe 58a gelagert. Die Sonnenradwelle entspricht dabei der Getriebeeingangswelle 70.

Die Planetenräder 62b der spindelseitigen Umlaufrädergetriebestufe 58b sind ferner mit einem Hohlrad 78 der spindelseitigen Umlaufrädergetriebestufe 58b gekoppelt.

Dieses Hohlrad 78 ist über eine Kupplung 80 mit der Spindel 26 drehgekoppelt. Dabei ist das Hohlrad 78 im Spindelantriebsbaugruppengehäuse 14 und/oder im Umlaufrädergetriebegehäuse 74 drehbar gelagert.

Das Hohlrad 78 stellt also den Abtrieb oder den Drehmomentausgang des Umlaufrädergetriebes 58 dar.

Das Umlaufrädergetriebe 58 kann folgendermaßen montiert werden.

Zunächst werden alle Planetenräder 62a, 62b der beiden Umlaufrädergetriebestufen 58a, 58b im singulären Planetenträger 60 montiert.

Anschließend wird der Planetenträger 60 in das Hohlrad 72 der antriebsseitigen Umlaufrädergetriebestufe 58a oder in das Hohlrad 78 der abtriebsseitigen Umlaufrädergetriebestufe 58b eingesetzt.

Danach wird das jeweils andere Hohlrad, also das Hohlrad 78 oder das Hohlrad 72, auf diesen Verbund aufgesetzt.

Sodann wird das Umlaufrädergetriebegehäuse 74 bereitgestellt und mit dem Hohlrad 72 verbunden.

In der dargestellten Ausführungsform wird das Umlaufrädergetriebegehäuse 74 mit dem Hohlrad 72 in einem Überlappstoß laserverschweißt. Dafür ist das Umlaufrädergetriebegehäuse 74 laserlichtdurchlässig.

Damit die Spindelantriebsbaugruppe 12 im Betrieb Geräusche emittiert, die von einem Kraftfahrzeugnutzer als angenehm empfunden werden, ist der Verhältnis der Zähnezahl jedes der Planetenräder 62a der ersten Umlaufrädergetriebestufe 58a und der Zähnezahl jedes der Planetenräder 62b der zweiten Umlaufrädergetriebestufe 58b zu 2:1 gewählt.

In der dargestellten Ausführungsform umfasst jedes Planetenrad 62a der ersten Umlaufrädergetriebestufe 58a zwölf Zähne und jedes Planetenrad 62b der zweiten Umlaufrädergetriebestufe 58b sechs Zähne.

Das Verhältnis von 2:1 entspricht dem Intervall einer Oktave, wenn es auf ein Verhältnis von Schallfrequenzen bezogen ist.

Nachdem die von der ersten Umlaufrädergetriebestufe 58a emittierte Schallfrequenz maßgeblich durch die Zähnezahl der Planetenräder 62a der ersten Umlaufrädergetriebestufe 58a bestimmt wird und die von der zweiten Umlaufrädergetriebestufe 58b emittierte Schallfrequenz durch die Zähnezahl der Planetenräder 62b der zweiten Umlaufrädergetriebestufe 58b, emittiert die Spindelantriebsbaugruppe 12 im Betrieb also Schallfrequenzen, die eine Oktave bilden. Dies wird von Fahrzeugnutzern als besonders angenehm empfunden.

Zudem assoziiert ein Fahrzeugnutzer mit solchen angenehmen Geräuschen ein hohes Qualitätsniveau der Spindelantriebsbaugruppe 12.

Alternativ kann das Verhältnis der Zähnezahlen jedes der Planetenräder 62a der ersten Umlaufrädergetriebestufe und der Zähnezahl jedes der Planetenräder 62b der zweiten Umlaufrädergetriebestufe auch zu 3:2, 4:3, 5:4 oder 6:5 gewählt werden.

Die emittierten Schallfrequenzen bilden dann eine Quinte, eine Quarte, eine große Terz bzw. eine kleine Terz. Auch diese Intervalle werden von Menschen als angenehm empfunden.

Allgemein gesprochen, wird das Verhältnis der Zähnezahl eines jeden Planetenrades 62a der ersten Umlaufrädergetriebestufe 58a und der Zähnezahl eines jeden Planetenrades 62b der zweiten Umlaufrädergetriebestufe 58b derart gewählt, dass im Betrieb eine erste Schallfrequenz, die von der ersten Umlaufrädergetriebestufe 58a emittiert wird, um ein ganzzahliges Vielfaches eines Halbtons gegenüber einer zweiten Schallfrequenz, die von der zweiten Umlaufrädergetriebestufe 58b emittiert wird, abweicht.

Die bevorzugte Ausführungsform der Oktave umfasst dabei zwölf Halbtonschritte, die der Quinte sieben, die der Quarte fünf, die der großen Terz vier und die der kleinen Terz drei.

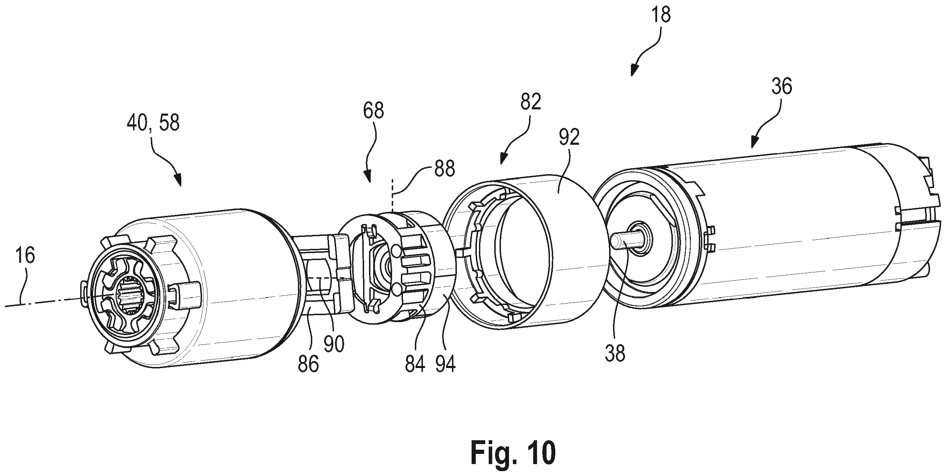

Die Kopplung des Spindelantriebsmotors 36 mit dem Getriebe 40, genauer gesagt mit dem zweistufigen Umlaufrädergetriebe 58, ist in Figur 10 im Detail dargestellt. Dabei sind dem Spindelantriebsmotor 36 und dem Getriebe 40 die einen Achsversatz ausgleichende Kupplung 68 und eine Hysteresebremse 82 antriebsmäßig zwischengeschaltet.

Wie bereits erwähnt, ist die Kupplung 68 eine Oldhamkupplung und umfasst ein antriebsmotorseitiges Kupplungsteil 84 sowie das getriebeseitige Kupplungsteil 69 (siehe Figur 8).

Die beiden Kupplungsteile 69, 84 sind über ein Kupplungszwischenteil 86 derart miteinander verbunden, dass die Motorwelle 38 und die Getriebeeingangswelle 70 drehfest miteinander verbunden sind.

Gleichzeitig ist das Kupplungszwischenteil 86 im montierten Zustand entlang einer Richtung 88 gegenüber dem antriebsmotorseitigen Kupplungsteil 84 verschiebbar.

Das getriebeseitige Kupplungsteil 69 ist gegenüber dem Kupplungszwischenteil 86 entlang einer Richtung 90 verschiebbar.

Die Richtung 88 und die Richtung 90 stehen dabei im Wesentlichen rechtwinklig aufeinander. Damit kann ein Achsversatz zwischen der Motorwelle 38 und der Getriebeeingangswelle 70 gemäß des Funktionsprinzips der Oldhamkupplung ausgeglichen werden.

Die Hysteresebremse 82 umfasst ein feststehendes Hysteresebremsenbauteil 92, das am Spindelantriebsbaugruppengehäuse 14 und/oder am Umlaufrädergetriebegehäuse 74 befestigt ist.

Zudem verfügt die Hysteresebremse 82 über ein mit der Motorwelle 38 drehgekoppeltes, drehbares Hysteresebremsenbauteil 94.

Dieses ist am antriebsmotorseitigen Kupplungsteil 84 befestigt oder in dieses integriert. Insbesondere ist das drehbare Hysteresebremsenbauteil 94 in das antriebsmotorseitige Kupplungsteil 84 eingespritzt.

Betrachtet man die Spindelantriebsbaugruppe 12 senkrecht zur Spindelantriebsachse 16, ist die Kupplung 68 in axialer Richtung im Wesentlichen vollständig innerhalb der Hysteresebremse 82, insbesondere innerhalb des feststehenden Hysteresebremsenbauteils 92 angeordnet. Der Aufbau der Kupplung 68 und der Hysteresebremse 82 ist also besonders kompakt.

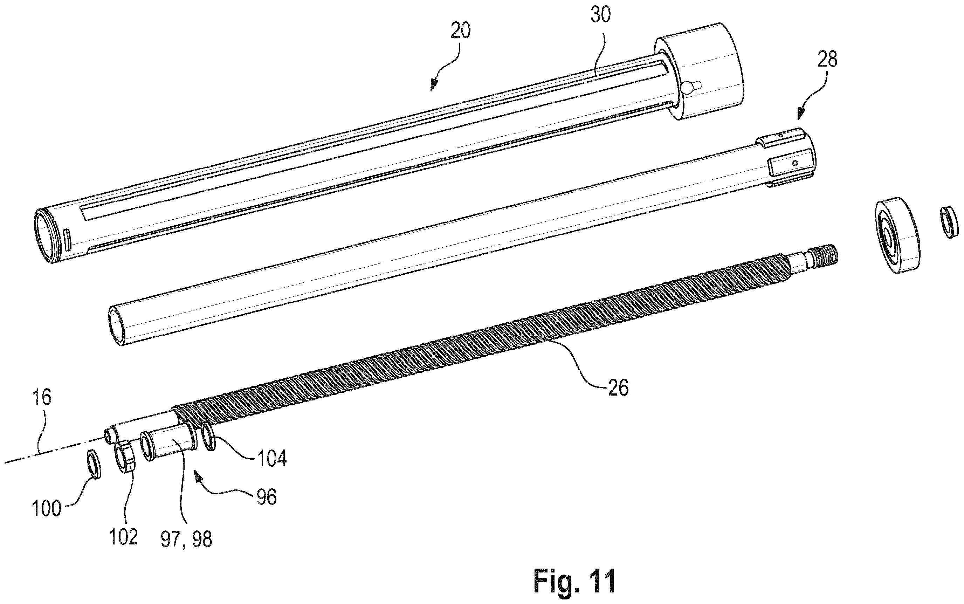

Die Figuren 11 - 14 zeigen die Spindeleinheit 20 im Detail.

Dabei ist an einem axialen Ende der Spindel 26 eine Anschlagsbaugruppe 96 angeordnet, die dazu ausgebildet ist, eine Beweglichkeit der Spindelmutter 28 entlang der Spindelantriebsachse 16 zu begrenzen. Konkret wird die Spindelmutter 28 so daran gehindert, sich über das Ende der Spindel 26 hinaus zu bewegen.

Die Anschlagsbaugruppe 96 umfasst ein plastisch verformbares Energieabsorptionsbauteil 97, das in der dargestellten Ausführungsform als Energieabsorptionshülse 98 ausgeführt ist, die im Wesentlichen koaxial die Spindel 26 umgibt.

Die Energieabsorptionshülse 98 ist also an der Spindel 26 gelagert.

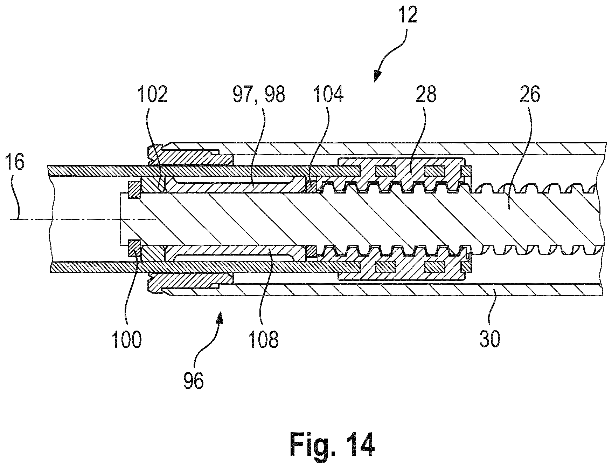

Die Energieabsorptionshülse 98 ist entlang der Spindelantriebsachse 16 zwischen einer spindelendseitigen Lagerscheibe 100 und der Spindelmutter 28 angeordnet (siehe insbesondere Figur 14).

Darüber hinaus ist zwischen der Energieabsorptionshülse 98 und der Lagerscheibe 100 ein Lagerelement 102 zur Lagerung der Spindel 26 am Spindelantriebsbaugruppengehäuse 14 vorgesehen.

Zwischen der Energieabsorptionshülse 98 und der Spindelmutter 28 ist darüber hinaus eine axial auf der Spindel 26 verschiebbare Anlaufscheibe 104 angeordnet.

Sowohl die Lagerscheibe 100 als auch die Anlaufscheibe 104 sind in der dargestellten Ausführungsform aus einem Metallwerkstoff hergestellt.

Die Energieabsorptionshülse 98 weist an ihren beiden axialen Enden jeweils einen als Krafteinleitungskragen ausgebildeten Kragen 106a, 106b auf.

Zwischen den Kragen 106a, 106b liegt ein in Richtung der Spindelantriebsachse 16 strauchbarer Verformungsabschnitt 108.

In der dargestellten Ausführungsform weist der Verformungsabschnitt lediglich einen einzigen Verformungsbereich auf. In alternativen Ausführungsformen kann er jedoch mehrere, insbesondere zwei Verformungsbereiche umfassen, wobei beide Verformungsbereiche in Richtung der Spindelantriebsachse 16 stauchbar sind.

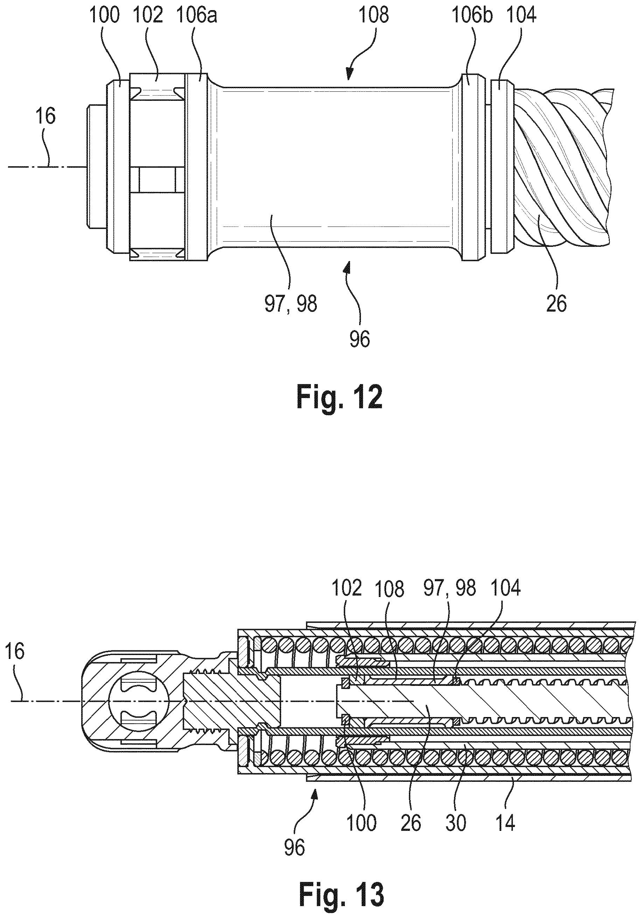

In einem Regulärbetrieb der Spindelantriebsbaugruppe 12 ist die Energieabsorptionshülse 98 im wesentlichen plastisch unverformt (siehe insbesondere die Figuren 12 bis 14). Dabei treten im Regulärbetrieb vorzugsweise Belastungen der Energieabsorptionshülse 98 auf, die ausschließlich Kräfte von weniger als 750 N umfassen.

Eine Belastung der Energieabsorptionshülse 98 mit einer Kraft von im Wesentlichen über 3000 N stellt für die dargestellte Ausführungsform ein Überlastereignis dar. Dadurch wird die Energieabsorptionshülse 98 plastisch verformt.

Ein solches Überlastereignis tritt auf, wenn die Spindelmutter 28 mit zu hoher Geschwindigkeit und/oder einer zu großen Kraft auf die Anschlagsbaugruppe 96, genauer gesagt die Energieabsorptionshülse 98 aufläuft.

Das kann beispielsweise bei einem Defekt der Hysteresebremse 82 passieren.

Auch kann ein Überlastereignis bei der Montage der Fahrzeugklappe 10 auftreten, wenn zwar die Spindelantriebsbaugruppe 12 schon mit der Fahrzeugklappe 10 verbunden ist, jedoch noch weitere Komponenten der Fahrzeugklappe 10 fehlen. Die Fahrzeugklappe 10 ist dann deutlich leichter als im Betrieb eines zugehörigen Fahrzeugs, für den die Spindelantriebsbaugruppe 12 ausgelegt ist. In diesem Zusammenhang kann die Spindelantriebsbaugruppe 12 mittels einer nicht näher bezeichneten Feder in eine Öffnungsstellung überführt werden. Aufgrund des verhältnismäßig geringen Gewichts der Fahrzeugklappe läuft die Spindelmutter 28 dann zu schnell an der Anschlagsbaugruppe 96 an.

Bei allen Überlastereignissen nimmt die Energieabsorptionshülse 98 die aus der überhöhten Geschwindigkeit und/oder der überhöhten Kraft resultierende Energie auf und schützt so die übrigen Komponenten der Spindelantriebsbaugruppe 12 vor Schäden.

In Figur 14 ist die Spindelmutter 28 an der Energieabsorptionshülse 98 anliegend dargestellt. Allerdings ist diese aus Gründen der besseren Übersichtlichkeit in ihrem plastisch unverformten Zustand gezeigt.

Bei einem nachfolgenden Betrieb der Spindelantriebsbaugruppe 12, in dem weiterhin das Öffnen und Schließen der Fahrzeugklappe 10 problemlos möglich ist, spricht man auch von einem Überlastfolgebetrieb. In diesem Betriebszustand ist die Energieabsorptionshülse 98 plastisch verformt (nicht dargestellt).

Für den Fall, dass die Energieabsorptionshülse 98 mehrere Verformungsbereiche umfasst, ist im Überlastfolgebetrieb nur einer der Verformungsbereiche plastisch verformt.

Tritt nachfolgend ein zweites Überlastereignis auf und umfasst die Energieabsorptionshülse 98 einen zweiten Verformungsbereich, so verformt sich dieser aufgrund des zweiten Überlastereignisses plastisch. Nachfolgend tritt die Spindelantriebsbaugruppe 12 in einen sekundären Überlastfolgebetrieb ein, in dem weiterhin das Öffnen und Schließen der Fahrzeugklappe 10 mittels der Spindelantriebsbaugruppe 12 gewährleistet ist.

## Patentansprüche

1. Spindelantriebsbaugruppe (12) zum Öffnen und/oder Schließen einer Fahrzeugklappe (10), mit einer sich entlang einer Spindelantriebsachse (16) erstreckenden Spindel (26) und einem über ein Getriebe (40) mit der Spindel (26) antriebsmäßig gekoppelten Spindelantriebsmotor (36), dessen Motorwelle (38) im Wesentlichen koaxial zur Spindelantriebsachse (16) angeordnet ist, wobei dem Spindelantriebsmotor (36) und dem Getriebe (40) eine Achsversatz ausgleichende Kupplung (68) sowie eine Hysteresebremse (82) antriebsmäßig zwischengeschaltet sind.

2. Spindelantriebsbaugruppe (12) nach Anspruch 1, **dadurch gekennzeichnet, dass** die Kupplung (68) eine Oldhamkupplung ist und ein antriebsmotorseitiges Kupplungsteil (84) und ein getriebeseitiges Kupplungsteil (69) umfasst.

3. Spindelantriebsbaugruppe (12) nach Anspruch 1 oder 2, **dadurch gekennzeichnet, dass** die Hysteresebremse (82) ein an einem Spindelantriebsbaugruppengehäuse (14) und/oder an einem Getriebegehäuse (74) befestigtes, feststehendes Hysteresebremsenbauteil (92) und ein mit einer Motorwelle (38) des Spindelantriebsmotors (36) drehgekoppeltes, drehbares Hysteresebremsenbauteil (94) umfasst.

4. Spindelantriebsbaugruppe (12) nach Anspruch 2 und Anspruch 3, **dadurch gekennzeichnet, dass** das drehbare Hysteresebremsenbauteil (94) am antriebsmotorseitigen Kupplungsteil (84) befestigt ist oder in das antriebsmotorseitige Kupplungsteil (84) integriert ist.

5. Spindelantriebsbaugruppe (12) nach Anspruch 4, **dadurch gekennzeichnet, dass** das drehbare Hysteresebremsenbauteil (94) in das antriebsmotorseitige Kupplungsteil (84) eingespritzt ist.

6. Spindelantriebsbaugruppe (12) nach einem der vorhergehenden Ansprüche, **dadurch gekennzeichnet, dass** senkrecht zur Spindelantriebsachse (16) betrachtet die Kupplung (68) in axialer Richtung im Wesentlichen vollständig innerhalb der Hysteresebremse (82), insbesondere innerhalb eines feststehenden Hysteresebremsenbauteils (92) angeordnet ist.

7. Fahrzeugklappe (10), insbesondere Fahrzeugheckklappe oder Fahrzeugkofferraumdeckel, mit einer Spindelantriebsbaugruppe (12) nach einem der vorhergehenden Ansprüche.

## Claims

1. A spindle drive assembly (12) for opening and/or closing a vehicle flap (10), comprising a spindle (26) extending along a spindle drive axis (16) and a spindle drive motor (36) which is drivingly coupled to the spindle (26) via a gearing (40) and the motor shaft (38) of which is arranged substantially coaxially with the spindle drive axis (16), wherein a coupling (68) compensating an axial offset and a hysteresis brake (82) are drivingly interposed between the spindle drive motor (36) and the gearing (40).

2. The spindle drive assembly (12) according to claim 1, **characterized in that** the coupling (68) is an Oldham coupling and comprises a drive motor-side coupling part (84) and a gearing-side coupling part (69).

3. The spindle drive assembly (12) according to claim 1 or 2, **characterized in that** the hysteresis brake (82) comprises a stationary hysteresis brake component (92) fastened to a spindle drive assembly housing (14) and/or to a gearing housing (74) and a rotatable hysteresis brake component (94) rotationally coupled to a motor shaft (38) of the spindle drive motor (36).

4. The spindle drive assembly (12) according to claim 2 and claim 3, **characterized in that** the rotatable hysteresis brake component (94) is fastened to the drive motor-side coupling part (84) or is integrated in the drive motor-side coupling part (84).

5. The spindle drive assembly (12) according to claim 4, **characterized in that** the rotatable hysteresis brake component (94) is injected in the drive motor-side coupling part (84).

6. The spindle drive assembly (12) according to any of the preceding claims, **characterized in that** viewed perpendicularly to the spindle drive axis (16), the coupling (68) is arranged substantially completely inside the hysteresis brake (82) in the axial direction, in particular inside a stationary hysteresis brake component (92).

7. A vehicle flap (10), in particular a vehicle hatch or tailgate or vehicle trunk lid, comprising a spindle drive assembly (12) according to any of the preceding claims.

## Revendications

1. Ensemble d'entraînement de vis (12) pour l'ouverture et/ou la fermeture d'un ouvrant de véhicule (10), comprenant une vis (26) qui s'étend le long d'un axe d'entraînement de vis (16) et un moteur d'entraînement de vis (36) qui est couplé en termes d'entraînement à la vis (26) par un engrenage (40) et dont l'arbre de moteur (38) est agencé de manière sensiblement coaxiale à l'axe d'entraînement de vis (16), un accouplement (68) compensant un décalage axial et un frein à hystérésis (82) étant intercalés en termes d'entraînement entre le moteur d'entraînement de vis (36) et l'engrenage (40).

2. Ensemble d'entraînement de vis (12) selon la revendication 1, **caractérisé en ce que** l'accouplement (68) est un accouplement Oldham et comprend une partie d'accouplement (84) côté moteur d'entraînement et une partie d'accouplement (69) côté engrenage.

3. Ensemble d'entraînement de vis (12) selon la revendication 1 ou 2, **caractérisé en ce que** le frein à hystérésis (82) comprend un composant (92) de frein à hystérésis stationnaire et fixé à un boîtier (14) d'ensemble d'entraînement de vis et/ou à un boîtier d'engrenage (74), et un composant (94) de frein à hystérésis mobile en rotation et couplé en rotation à un arbre de moteur (38) du moteur d'entraînement de vis (36).

4. Ensemble d'entraînement de vis (12) selon la revendication 2 ou la revendication 3, **caractérisé en ce que** le composant (94) de frein à hystérésis mobile en rotation est fixé à la partie d'accouplement (84) côté moteur d'entraînement ou est intégré dans la partie d'accouplement (84) côté moteur d'entraînement.

5. Ensemble d'entraînement de vis (12) selon la revendication 4, **caractérisé en ce que** le composant (94) de frein à hystérésis mobile en rotation est injecté dans la partie d'accouplement (84) côté moteur d'entraînement.

6. Ensemble d'entraînement de vis (12) selon l'une des revendications précédentes, **caractérisé en ce que**, vu perpendiculairement à l'axe d'entraînement de vis (16), l'accouplement (68) est agencé dans le sens axial sensiblement entièrement à l'intérieur du frein à hystérésis (82), en particulier à l'intérieur d'un composant (92) de frein à hystérésis stationnaire.

7. Ouvrant de véhicule (10), en particulier hayon arrière de véhicule ou couvercle de coffre de véhicule, comprenant un ensemble d'entraînement de vis (12) selon l'une des revendications précédentes.
